# NEUE EUROPÄISCHE PATENTSCHRIFT

(11) **EP 2 254 717 B3**
(45) Veröffentlichungstag dieser Patentschrift: **06.11.2013**
(45) Hinweis auf die Patenterteilung: 12.10.2011
(21) Anmeldenummer: 09715207.8
(22) Anmeldetag: 20.02.2009
(51) Int. Cl.: B23C 3/18

(54) **WERKZEUGMASCHINE, INSBESONDERE ZUM TURBOLADER-VERDICHTERRADFRÄSEN**
MACHINE TOOL, PARTICULARLY FOR MILLING A TURBOCHARGER COMPRESSOR IMPELLER
MACHINE-OUTIL, EN PARTICULIER POUR LE FRAISAGE DE LA ROUE DU COMPRESSEUR D'UN TURBOCOMPRESSEUR

(30) Priorität: 29.02.2008 DE 102008013716
(43) Veröffentlichungstag der Anmeldung: 01.12.2010
(73) Patentinhaber: Chiron-Werke GmbH & Co. KG, 78532 Tuttlingen (DE)
(72) Erfinder: PRUST, Dirk, 78532 Tuttlingen (DE); DEUFEL, Karl, 78600 Kolbingen (DE)
(74) Vertreter: Witte, Weller & Partner
(86) Internationale Anmeldenummer: PCT/EP2009/001229
(87) Internationale Veröffentlichungsnummer: WO 2009/106268

(56) Entgegenhaltungen:
- EP-A- 1 445 056
- US-A- 2 909 966
- US-A1- 2005 023 778

## Beschreibung

Die vorliegende Erfindung betrifft eine Werkzeugmaschine zur spanenden Bearbeitung, insbesondere zur Dreh- und Fräsbearbeitung, eines eine zentrische Bohrung aufweisenden Werkstücks, mit einem Werkzeughalter zum Halten eines Werkzeugs, einer Werkstückauflage zum Auflegen des Werkstücks, einer Werkstückhalterung zum Festhalten des Werkstücks und einem Antriebsmittel zum Drehen des Werkstücks um eine zentrische Drehachse. Eine derartige Werkzeugmaschine ist z.B. aus US-A-2909 966 bekannt.

Die Erfindung betrifft darüber hinaus auch eine weitere Werkzeugmaschine zur spanenden Bearbeitung, insbesondere zur Dreh- und Fräsbearbeitung, eines eine zentrische Drehachse aufweisenden Werkstücks, mit einem Werkzeughalter zum Halten eines Werkzeugs, einer Werkstückauflage zum Auflegen des Werkstücks, einer Werkstückhalterung zum Festhalten des Werkstücks und einem Antriebsmittel zum Drehen des Werkstücks um die Drehachse.

Die Erfindung betrifftfernerentsprechende Verfahren zur spanenden Bearbeitung, insbesondere zur Dreh- und Fräsbearbeitung, eines Werkstücks.

Die Erfindung betrifft insbesondere eine Werkzeugmaschine und ein entsprechendes Verfahren zur spanenden Bearbeitung von Werkstücken, die im bestimmungsgemäßen Einsatz mit hohen Drehzahlen betrieben werden und die insbesondere eine Fräs- und Drehbearbeitung benötigen, wie beispielsweise ein Turbolader-Verdichterrad.

Bei einer der Anmelderin bekannten Werkzeugmaschine zum Bearbeiten eines Turbolader-Verdichterrades wird der Werkstückrohling, dessen Außenkonturen vorbearbeitet, insbesondere vorgedreht sind, auf eine Werkstückauflage aufgelegt. Die Auflagefläche dieser Werkstückauflage ist dabei der darauf aufliegenden Außenkontur des Verdichterrades angepasst, so dass die Unterseite des Verdichterrades möglichst vollständig auf der Werkstückauflage aufliegt. Zum Fixieren des Verdichterrades wird eine Schraube durch eine zentrische Bohrung in dem Verdichterrad geführt, an deren oberem Ende eine Mutter aufgeschraubt wird, wodurch das Verdichterrad nach unten zur Werkstückauflage hin angepresst und festgehalten wird. Danach erfolgt die Bearbeitung des Werkstücks. Bei einem Turbolader-Verdichterrad handelt es sich dabei überwiegend um eine Fräsbearbeitung, mit der die relativ komplexen Außenflächen in den Werkstückrohling eingebracht werden.

Da ein solches Turbolader-Verdichterrad bei extrem hohen Drehzahlen (bis zu 200.000 U/min) betrieben wird, ist es erforderlich, dass der Werkstückrohling zur Bearbeitung möglichst zentrisch angeordnet ist, also so konzentrisch wie möglich zur Bearbeitungsdrehachse, um die das Werkstück während der Bearbeitung rotiert wird. Bei Werkstückrohlingen mit vorgearbeiteter Mittenbohrung, die im späteren Betrieb des Werkstücks die Rotationsachse definiert, ist insbesondere erforderlich, dass die Bearbeitung zentrisch zu dieser Mittenbohrung erfolgt. Bei der bekannten Werkzeugmaschine ist jedoch keine ausreichende Präzision hinsichtlich der zentrischen Anordnung des Werkstücks bzw. deren Mittenbohrung vor und während der Bearbeitung erreichbar, weshalb das Werkstück nach der Bearbeitung zwingend nachgewuchtet werden muss, um bestehende Unwuchten zu beseitigen. Für ein solches Nachwuchten muss das Werkstück in eine andere Vorrichtung neu eingespannt werden, was einerseits zeitaufwändig ist und andererseits erneut eine Quelle für Ungenauigkeiten darstellt.

Vor diesem Hintergrund liegt der vorliegenden Erfindung die Aufgabe zugrunde, eine Werkzeugmaschine und ein entsprechendes Verfahren zur spanenden Bearbeitung eines Werkstücks zu schaffen, mit denen insbesondere Werkstücke, die für einen Betrieb mit sehr hohen Drehzahlen vorgesehen sind, mit hoher Präzision bearbeitetwerden können, so dass ein Auswuchten nach der Bearbeitung möglichst komplett entfallen kann.

Bei der eingangs genannten Werkzeugmaschine wird diese Aufgabe erfindungsgemäß dadurch gelöst, dass die Werkstückauflage einen Dorn zum formschlüssigen Aufstecken des Werkstücks aufweist, so dass ein Abschnitt des Dorns auf einer ersten Seite des Werkstücks in die Bohrung hinein ragt, und dass die Werkstückhalterung einen in Richtung der Bohrungsachse der zentrischen Bohrung bewegbaren Gegenhalter zum Beaufschlagen des Werkstücks mit einem in Richtung der Bohrungsachse wirkenden Anpressdruck auf einer der ersten Seite gegenüber liegenden zweiten Seite aufweist, und dass die Werkstückauflage eine Werkstückauflagefläche zum Auflegen des Werkstücks aufweist, die derart ausgestaltet ist, dass das Werkstück im auf dem Dorn aufgesteckten und von dem Gegenhalter angepressten Zustand nur in seinem Randbereich auf der Werkstückauflagefläche aufliegt.

Bei dem entsprechenden Verfahren wird diese Aufgabe erfindungsgemäß dadurch gelöst, dass das Werkstück formschlüssig auf einen Dorn aufgesteckt wird, so dass ein Abschnitt des Dorns auf einer ersten Seite des Werkstücks in die Bohrung hinein ragt, und dass das Werkstück in Richtung der Bohrungsachse der zentrischen Bohrung mit einem in Richtung der Bohrungsachse wirkenden Anpressdruck auf einer der ersten Seite gegenüber liegenden zweiten Seite beaufschlagt wird, um das Werkstück festzuhalten, und dass die Werkstückauflage eine Werkstückauflagefläche zum Auflegen des Werkstücks aufweist, die derart ausgestaltet ist, dass das Werkstück im auf dem Dorn aufgesteckten und von dem Gegenhalter angepressten Zustand nur in seinem Randbereich auf der Werkstückauflagefläche aufliegt.

Die der Erfindung zugrunde liegende Aufgabe wird auf diese Weise vollkommen gelöst.

Der Erfindung liegt die Erkenntnis zugrunde, dass bei der bekannten Werkzeugmaschine das Werkstück zwar mittels Schraube und Mutter ausreichend fest gehalten werden kann, dass aber die zentrierte Anordnung trotz der Werkstückauflage mit einer der U nterseite des Werkstücks angepassten Kontur nicht mit ausreichender Genauigkeit möglich ist, da weder diese Werkstückauflage noch diese Art der Werkstückhalteru ng das Werkstück selbst hochpräzise in die zentrische Lage bringt.

Dies ist jetzt überraschender Weise bei der erfindungsgemäßen Werkzeugmaschine möglich. Der Dorn der Werkstückauflage weist nämlich zumindestteilweise in einem Abschnitt ein Übermaß verglichen mit dem Durchmesser der Bohrung des Werkstücks auf, so dass das Werkstück beim Aufstecken auf den Dorn quasi automatisch zentriertwird. Der Dorn kann beispielsweise ein Kegeldorn sein mit einem kegelförmigen Abschnitt, der teilweise in die Bohrung des Werkstücks hinein ragt. Alternativ kann der Dorn auch durch einen kurzen Zylinder mit einer Einführschräge oder-fase realisiertwerden. Grundsätzlich eignen sich als Dorn alle Bauteile, die einen formschlüssigen zentrierten Sitz beim Aufstecken des Werkstücks auf den Dorn gewährleisten.

DiesesZentrierenwirdauchweiterdadurchunterstützt, dass zum Festhalten des Werkstücks von oben ein Anpressdruck auf das Werkstück mittels einer Werkstückhalterung aufgebracht wird, der genau in Richtung der Bohrungsachse wirkt. Dadurch wird das Werkstück mit sehr hoher Präzision zentrisch eingespannt und zwischen der als eine Art Reitstock wirkenden Werkstückhalterung und der Werkstückauflage um die zentrische Bohrungsachse drehbarfestgehalten. Die Bohrungsachse und die Werkstück-Drehachse fallen somit mit hoher Genauigkeit zusammen, und das Werkstück ist zur spanenden Bearbeitung konzentrisch zur Werkstück-Drehachse angeordnet.

Die Bearbeitung des Werkstücks kann folglich bei der erfindungsgemäßen Werkzeugmaschine und dem erfindungsgemäßen Verfahren mit hoher Präzision erfolgen. Ferner ist in derselben Aufspannung des Werkstücks mit der selben Werkzeugmaschine beispielsweise ein Nachdrehen der Außenkontur nach der eigentlichen Bearbeitung (z.B. der eigentlichen Fräsbearbeitung) möglich, und es ist insbesondere kein anschließendes, zeitaufwändiges Auswuchten des Werkstücks mittels einer anderen Maschine und/oder in einer anderen Aufspannung mehr nötig. Die Werkstücke können somit insgesamt schneller und damit auch kostengünstiger hergestellt werden.

In einer bevorzugten Ausgestaltung ist vorgesehen, dass der Gegenhalter einen Dorn zum Einstecken in die Bohrung auf der zweiten Seite des Werkstücks aufweist, so dass ein kegelförmiger Abschnitt des Dorns auf der zweiten Seite des Werkstücks in die Bohrung hinein ragt. Neben einer einfachen Möglichkeit des Festhaltens des Werkstücks auf diese Weise trägt dieser Dorn ferner auch zum Zentrieren des Werkstücks bei, wenn insbesondere ein Teilabschnitt des Dorns ein Übermaß gegenüber dem Durchmesser der Bohrung des Werkstücks aufweist. Dieser Dorn des Gegenhalters kann grundsätzlich in gleicher Weise ausgestaltet und realisiert sein wie der Dorn der Werkstückauflage, was aber nicht zwingend der Fall sein muss.

In einerweiteren Ausgestaltung ist vorgesehen, dass die Werkstückhalterung ausgestaltet ist zum Verschwenken des Gegenhalters in einer zur Bohrungsachse senkrechten Schwenkebene. Hierdurch kann der Gegenhalter von dem Werkstück weggeschwenkt werden, so dass die Werkzeugmaschine vollautomatisch mit Werkstücken be- und entladen werden kann.

Bevorzugt ist ferner vorgesehen, dass die Werkstückauflage eine Werkstückauflagefläche zum Auflegen des Werkstücks aufweist, die derart ausgestaltet ist, dass das Werkstück im auf dem Dorn aufgesteckten und von dem Gegenhalter angepressten Zustand nur in seinem Randbereich auf der Werkstückauflagefläche aufliegt. Das Werkstück liegt also nicht, wie bei der bekannten Vorrichtung, mit seiner gesamten Unterseite auf einer entsprechend angepassten Werkstzickauflagefläche auf, sondern vorzugsweise nur in seinem Randbereich.

Die Erfinder haben nämlich festgestellt, dass durch ein Aufliegen des Werkstücks nur in diesem Bereich eine definierte Auflage des Werkstücks erreicht wird, die eine optimale kraftschlüssige (Drehmoment) Einspannung gegen das Verdrehen durch Bearbeitungskräfte aufgrund der größten Hebelwirkung bewirkt.

Die für, eine Bearbeitung mit der erfindungsgemäßen Werkzeugmaschine vorgesehenen Werkstücke haben zumeist eine zentrisch verlaufende Bohrungsachse, wobei die Bohrung zumeist (aber nicht zwingend) von der ersten Seite bis zur zweiten Seite des Werkstücks durchgängig ist. Insbesondere zur Bearbeitung derart ausgestalteter Werkstücke ist bevorzugt vorgesehen, dass die Drehachse, um die das Werkstück zur Bearbeitung in der Werkzeugmaschine gedreht wird, und die Bohrungsachse zusammenfallen. Die Werkstückauflage weist bei dieser Ausgestaltung nur einen einzigen Dorn auf, dervon der ersten Seite her in die Bohrung eingreift. Statt einer zentrischen Bohrung weisen andere Werkstücke einen zentrischen Bund, z.B. einen zentrischen Zylinder oder Kegel auf.

Alternativ kann jedoch auch vorgesehen sein, dass das Werkstück auf der ersten und/oder der zweiten Seite mehr als eine, beispielsweise drei, durchgängige oder sacklochartige Bohrungen aufweist und dass die Werkstückauflage und/oder der Gegenhalter eine entsprechende Anzahl von Domen zum Einstecken in die entsprechenden Bohrungen aufweist. Bei dieser Ausgestaltung fallen die Drehachse und die Bohrungsachsen nicht zusammen, sondern verlaufen parallel zueinander. Ansonsten wird aber auch bei dieser Ausgestaltung eine hochpräzise zentrische Lage des Werkstücks erreicht.

In weiteren bevorzugten Ausgestaltung ist vorgesehen, dass die Werkzeugmaschine zum Fräsen der Außenflächen eines Turbolader-Verdichterrades ausgestaltet ist. Mit der erfindungsgemäßen Werkzeugmaschine können insbesondere mehrere Bearbeitungsgänge bei gleicher Aufspannung des Werkzeuges erfolgen, was zeitsparend und präzisionsfördernd ist, da das Werkstück nicht umgespannt werden muss.

In einer bevorzugten Ausgestaltung des erfindungsgemäßen Verfahrens ist ferner vorgesehen, dass in einem ersten Bearbeitungsschritt die Außenflächen des Werkstücks bearbeitet werden mittels Drehen, Bohren und/oder Fräsen, und dass in einem zweiten Bearbeitungsschritt die Außenkontur des Werkstücks überdreht wird. Ein solches Verfahren kommt insbesondere bei der Bearbeitung eines Turbolader-Verdichterrades zum Einsatz.

Ferner ist bevorzugt vorgesehen, dass die Werkzeugmaschine eine quer zur Drehachse verlaufende Querachse aufweist, um die das Werkstück geschwenkt werden kann, wodurch auch komplizierte Bearbeitungen an dem Werkstück ermöglicht werden.

Ausgehend von der eingangs genannten weiteren Werkzeugmaschine wird die gestellte Aufgabe auch dadurch gelöst, dass die Werkstückauflage eine Bohrung zum formschlüssigen Aufnehmen eines auf einer ersten Seite des Werkstücks angebrachten Werkstückdorns aufweist, so dass ein Abschnitt des Werkstückdorns in die Bohrung hinein ragt, und dass die Werkstückhalterung einen in Richtung der Drehachse bewegbaren Gegenhalter zum Beaufschlagen des Werkstücks mit einem in Richtung der Drehachse wirkenden Anpressdruck auf einer der ersten Seite gegenüber liegenden zweiten Seite aufweist, und dass die Werkstückauflage eine Werkstückauflagefläche zum Auflegen des Werkstücks aufweist, die derart ausgestaltet ist, dass das Werkstück im in die Bohrung eingesteckten und von dem Gegenhalter angepressten Zustand nur in seinem Randbereich auf der Werkstückauflagefläche aufliegt.

Bei dem entsprechenden Verfahren wird diese Aufgabe erfindungsgemäß dadurch gelöst, dass das Werkstück mit einem auf einer ersten Seite angeordneten Werkstückdorn formschlüssig in eine in der Werkstückauflage vorgesehene Bohrung eingesteckt wird, so dass ein Abschnitt des Werkstückdorns in die Bohrung hinein ragt, und dass das Werkstück in Richtung der Drehachse mit einem in Richtung der Drehachse wirkenden Anpressdruck auf einer der ersten Seite gegenüber liegenden zweiten Seite beaufschlagt wird, um das Werkstück festzuhalten, und dass die Werkstückauflage eine Werkstückauflagefläche zum Auflegen des Werkstücks aufweist, die derart ausgestaltet ist, dass das Werkstück im in die Bohrung eingesteckten und von dem Gegenhalter angepressten Zustand nur in seinem Randbereich auf der Werkstückauflagefläche aufliegt.

Auch mit dieser Werkzeugmaschine und diesem Verfahren wird die gestellte Aufgabe vollkommen gelöst.

Bei dieser Werkzeugmaschine ist das Wirkprinzip zwischen der an der einen Seite des Werkstücks angebrachten Werkstückbohrung und dem an der gegenüber liegenden Seite der Werkstückhalterung angebrachten Dorn im Prinzip umgedreht bei ansonsten gleicher Wirkungsweise. Je nach Ausgestaltung des Werkstücks (mit Bohrung oder Dorn) wird also die entsprechende Werkzeugmaschine zu dessen Bearbeitung eingesetzt werden. Es versteht sich, dass die oben beschriebenen vorteilhaften Ausgestaltung sinngemäß in gleicher oder ähnlicher Weise auch für diese Werkzeugmaschine und dieses Verfahren gelten.

Weitere Vorteile ergeben sich aus der Beschreibung und der beigefügten Zeichnung.

Die Erfindung wird nachfolgend anhand von in den Zeichnungen dargestellten Ausführungsbeispielen näher erläutert. Es zeigen:
- Fig. 1: in schematischer Seitenansicht eine Prinzipskizze einer erfindungsgemä- ßen Werkzeugmaschine,
- Fig. 2: eine Schrägansicht der Vorrichtung einer ersten Ausgestaltung einer erfindungsgemäßen Werkzeugmaschine,
- Fig. 3: eine Seitenansicht der in Fig. 2 gezeigten Vorrichtung der Werkzeugma- schine,
- Fig. 4: eine Draufsicht auf die in Fig. 2 gezeigten Vorrichtung der Werkzeugma- schine,
- Fig. 5: eine vergrößerte Darstellung eines in die erste Ausgestaltung einer erfin- dungsgemäßen Werkzeugmaschine eingespannten Werkstücks,
- Fig. 6: eine vergrößerte Darstellung eines in eine zweite Ausgestaltung einer er- findungsgemäßen Werkzeugmaschine eingespannten Werkstücks, und
- Fig. 7: eine vergrößerte Darstellung eines in eine dritte Ausgestaltung einer erfin- dungsgemäßen Werkzeugmaschine eingespannten Werkstücks.

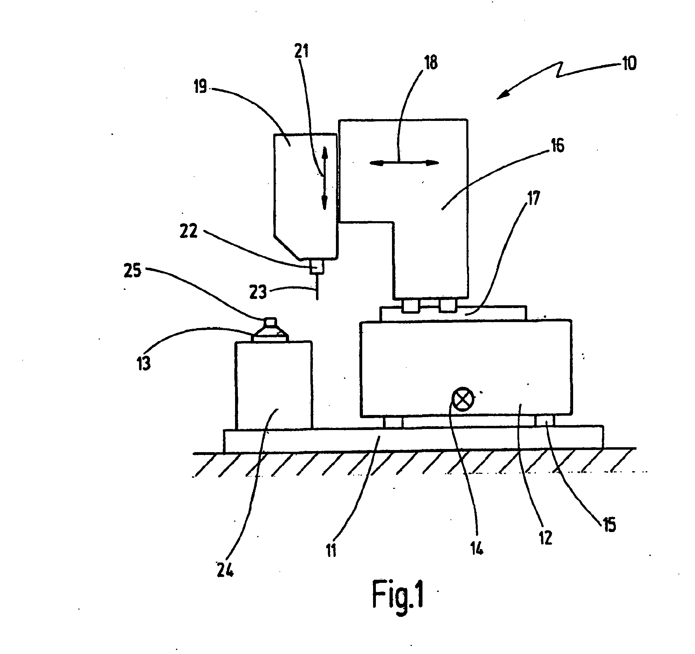

In Fig. 1 ist mit 10 eine Werkzeugmaschine bezeichnet, die in schematischer, nicht maßstabs- und detailgetreuer Darstellung gezeigt ist.

Die Werkzeugmaschine 10 weist auf ihrem Maschinenfuß 11 einen ersten Schlitten 12 auf, der in Richtung einer ersten Achse 14 auf Führungsschienen 15 verfahrbar ist. Auf dem ersten Schlitten 12 ist ein zweiter Schlitten 16 über Führungsschienen 17 in Richtung einer zweiten Achse 18 verfahrbar angeordnet.

An dem zweiten Schlitten 16 ist ein Spindelkopf 19 in Richtung einer dritten Achse 21 verfahrbar gelagert. In dem Spindelkopf 19 ist drehbar eine Arbeitsspindel 22 gelagert, die an ihrem unteren Ende ein Werkzeug 23 trägt.

Auf dem Maschinenfuß 11 ist ferner ein Werkstücktisch 24 vorgesehen, der eine Werkstückauflage 13 trägt. Auf dieser Werkstückauflage 13 sitzt das nur schematisch angedeutete Werkstück25, das durch Verfahren des Spindelkopfes 19 und damit der Arbeitsspindel 18 in den drei Achsen 14, 18, 21 mit dem Werkzeug 23 an unterschiedlichen Stellen bearbeitet wird.

Weitere Details und die grundsätzliche Funktionsweise einer solchen Werkzeugmaschine sind dem Fachmann allgemein bekannt und sollen deshalb an dieser Stelle nicht weiter ausgeführt werden.

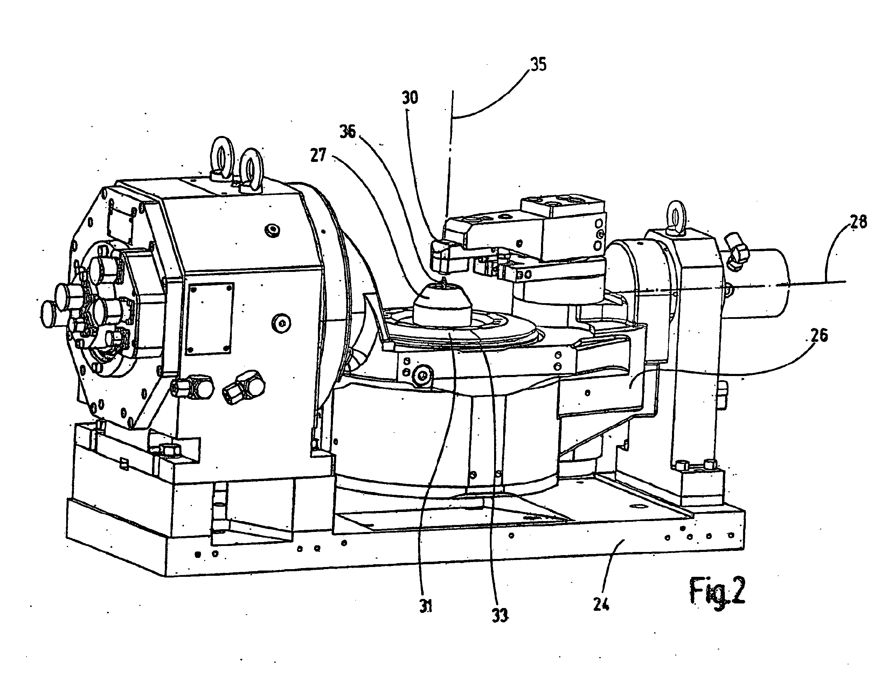

In Fig. 2 ist eine Schrägansicht einerersten konkreten Ausgestaltung einer erfindungsgemäßen Werkzeugmaschine dargestellt, wobei nurdiezu der sog. Vorrichtung gehörigen Teile der erfindungsgemäßen Werkzeugmaschine explizit gezeigt sind. Insbesondere sind sämtliche die Werkzeughalterung betreffenden Bauteile (also insbesondere Arbeitsspindel 22, Spindelkopf 19, zweiterSchlitten 16 und erster Schlitten 12) nicht gezeigt. Gleiche Bauteile sind ansonsten mit gleichen Bezugszeichen bezeichnet wie in Fig. 1.

Zu erkennen ist in Fig. 2 der Werkstücktisch 24 mit einem rotierbaren Werkstückteller 31, auf dem eine Werkstückaufnahme 27 sitzt, die zur Anpassung an verschiedene Werkstücke austauschbar ist. Werkstückteller31 und Werkstückaufnahme 27 bilden zusammen bei dieser Ausgestaltung die Werkstückauflage 13. Grundsätzlich ist es jedoch auch möglich, das Werkstück (ohne Werkstückaufnahme 27) direkt auf den Werkstückteller 31 aufzulegen.

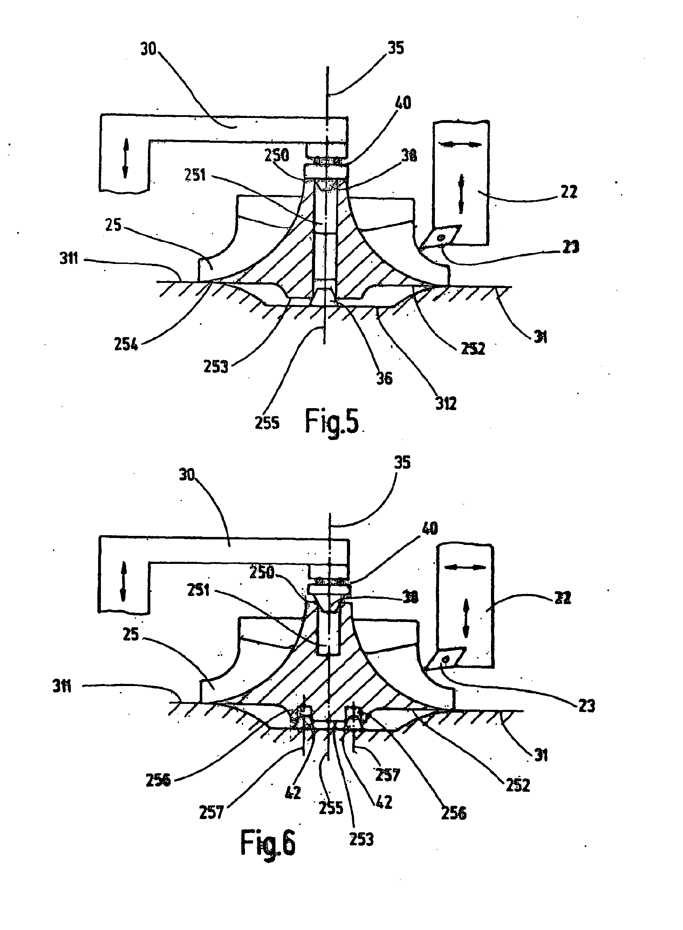

Auf der Werkstückaufnahme 27 liegt das (in Figur 2 nicht gezeigte) Werkstück, beispielsweise ein Werkstückrohling mit einer vorbearbeiteten Außenkontur zur Herstellung eines Turbolader-Verdichterrades, auf. Durch die Werkstückaufnahme 27 ragt nach oben ein Zentrierdorn 36 heraus, der zur Zentrierung des Werkstücks dient. Ferner ist ein von oben auf das Werkstück aufsetzbarer Gegenhalter 30 erkennbar, mit dem ein Anpressdruck von oben auf das Werkstück zum Festhalten des Werkstücks während der Bearbeitung aufgebracht werden kann. Das Werkstück samt Werkstückaufnahme 27 und Werkstückteller 31 ist mittels einer in dem Werkstücktisch 24 angeordneten Antriebsvorrichtung 33 um eine vertikale Drehachse 35, die derzentralen Rotationsachse 255 (vgl. Fig. 5) des Werkstücks entspricht, zentrierbar. Diese Antriebsvorrichtung 33 kann beispielsweise ein Torquemotor sein. Ferner ist die sog. Wiege 26, auf der die Antriebsvorrichtung 33, der Werkstückteller 31 und die Werkstückaufnahme 27 sitzen, um eine Querachse 28 verschwenkbar.

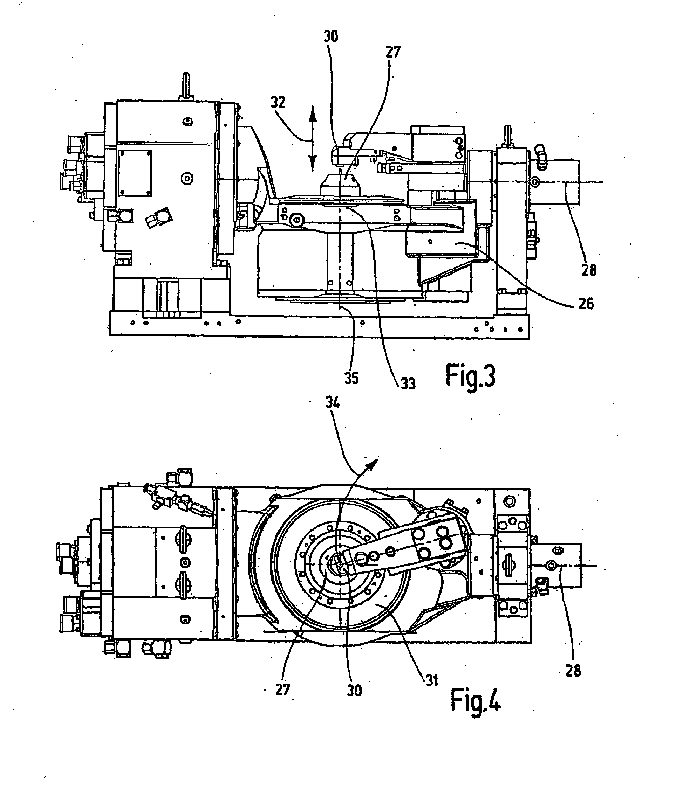

Wie aus der in Fig. 3 gezeigten Seitenansicht und der in Fig. 4 gezeigten Draufsicht auf die Vorrichtung dieser Ausgestaltung der erfindungsgemäßen Werkzeugmaschine erkennbar ist, ist der Gegenhalter 30 sowohl in vertikaler Richtung 32 bewegbar als auch in einer senkrecht zur vertikalen Richtung 32 liegenden Ebene verschwenkbar (Pfeil 34), um die Werkzeugmaschine von oben mit Werkstücken beladen bzw. entladen zu können.

Nähere Details der genauen Aufspannung des Werkstücks 25 bei einer konkreten Ausgestaltung der erfindungsgemäßen Werkzeugmaschine können der Fig. 5 entnommen werden. Dort ist ein Querschnitt durch ein Werkstück 25 (hier ein Turbolader-Verdichterrad) während der Bearbeitung durch ein Werkzeug 23 gezeigt. Das Werkstück 25 weist eine zentrisch verlaufende durchgängige Bohrung 251 auf. In diese Bohrung 251 greift von unten ein Dorn 36 ein, vorliegend ein Kegeldorn, derzentrisch auf der Oberseite 311 des Werkstücktellers 31 fest angeordnet ist. Dieser Kegeldorn 36 weist ein Übermaß gegenüber der Bohrung 251 auf, so dass nur der obere Teil des Kegeldorns 36 in die Bohrung 251 hinein ragt, während der untere Teil heraus ragt. Da das Werkstück 25 an der Unterseite 252 im zentralen Bereich 253 um die Bohrung 251 herum gegenüberder restlichen Fläche der Unterseite 252 vorsteht, weist die Oberseite 311 des Werkstücktellers 31 in diesem zentralen Bereich 312 eine Vertiefung auf. Die als Werkstückauflage dienende Oberseite 311 des Werkstücktellers 31 ist ferner so ausgestaltet, dass das Werkstück 25 in dieser Ausgestaltung nur in seinem Randbereich 254 mit der Unterseite 252 auf dem Werkstückteller 31 aufliegt, nicht aber in allen weiter innen liegenden Bereichen der Unterseite 252. Durch diese Ausgestaltung wird eine präzise definierte Auflage des Werkstücks 25 erreicht, bei der die kraftschlüssige Einspannung gegen Verdrehen durch die Bearbeitungskräfte optimal ist. Insgesamt wir mit dieser Ausgestaltung erreicht, dass das Werkstück 25 mit hoher Präzision zentrisch in die Werkzeugmaschine eingesetztwerden kann, so dass also die vorliegend vertikal verlaufende zentrische Bohrungsachse 255 genau der Drehachse 35 entspricht, um die das Werkstück 25 während der Bearbeitung gedreht wird.

Zum Festhalten des Werkstücks 25 befindet sich der Greifarm 30 in der in Fig. 5 gezeigten Position, in der er einen Anpressdruck von oben möglichst genau in Richtung der Bohrungsachse 255 auf das Werkstück 25 aufbringt. Bei der gezeigten Ausgestaltung ist dazu an der Unterseite des vorderen Endes des Gegenhalters 30 ein weiterer Kegeldorn 38 angeordnet, der über eine eine Rotation des Kegeldoms 38 gegenüber dem Gegenhalter 30 erlaubende Lagerung 40 mit dem Gegenhalter 30 verbunden ist. Dieser Kegeldorn 38 ist dabei so ausgestaltet, dass dessen unterer Rand von oben in die Bohrung 251 hinein ragt.

Bevorzugt ist der Kegeldorn 38 dabei ähnlich wie der Kegeldorn 36 mit einem geringen (z.B. nur wenige µm, beispielsweise 2-10 µm) Übermaß ausgestaltet, so dass der Kegeldorn 38 bei dieser Ausgestaltung nicht über seine volle Länge in die Bohrung 251 hinein ragt. Alternativ kann jedoch auch vorgesehen sein, dass der Kegeldorn 38 so ausgestaltet ist, dass er passgenau vollständig (über seine volle Länge) in die Bohrung 251 hinein ragt, so dass über die auf der Oberseite 250 des Werkstücks 25 aufliegende Unterseite der Lagerung 40 der Anpressdruck zumindest teilweise auf das Werkstück 25 von oben durch den Gegenhalter 30 aufgebracht wird. In beiden Ausgestaltungen trägt jedoch der von oben genau zentrisch in die Bohrung 251 eingreifende Kegeldorn 38 ebenfalls zur Zentrierung des Werkstücks 25 bei.

Ein Querschnitt durch ein Werkstück 25, wie es zur Bearbeitung in einer zweiten Ausgestaltung einer erfindungsgemäßen Werkzeugmaschine aufgespannt ist, ist in Fig. 6 gezeigt. Anders als das in Fig. 5 gezeigte Werkstück weist das Werkstück 25 hier keine durchgängige zentrische Bohrung, sondern im oberen, zum Gegenhalter 30 hin weisenden Bereich eine zentrische Sacklochbohrung 251 auf. Ferner sind an der Unterseite 252 im zentralen Bereich 253 mehrere Bohrungen 256, vorzugsweise gleichmäßig verteilt, um und in gleichmäßigen Abständen zu der zentralen Bohrungsachse 255 angeordnet.

Wie bei der in Fig. 5 gezeigten Ausgestaltung greift von oben in die Bohrung 251 ein Kegelstumpf 38 ein, wobei bei der in Fig. 6 gezeigten Ausgestaltung der Kegelstumpf 38 ein Übermaß gegenüber dem Innendurchmesser der Bohrung 251 aufweist und somit nicht vollständig in diesen hinein ragt. Zum Eingreifen in die Bohrungen 256 sind an der Oberseite 311 des Werkstücktellers 31 nun entsprechende Kegeldorne 42 vorgesehen, die konzentrisch zu der jeweils korrespondierenden Bohrung 256, also zentrisch um die korrespondierende Bohrungsachse 257, angeordnet sind und teilweise in die korrespondierende Bohrung 256 hinein ragen. Die Anzahl der Kegeldorne 42 entspricht dabei der Anzahl der Bohrungen 256, wobei mindestens zwei, bevorzugt mindestens drei, Kegeldorne vorgesehen sind.

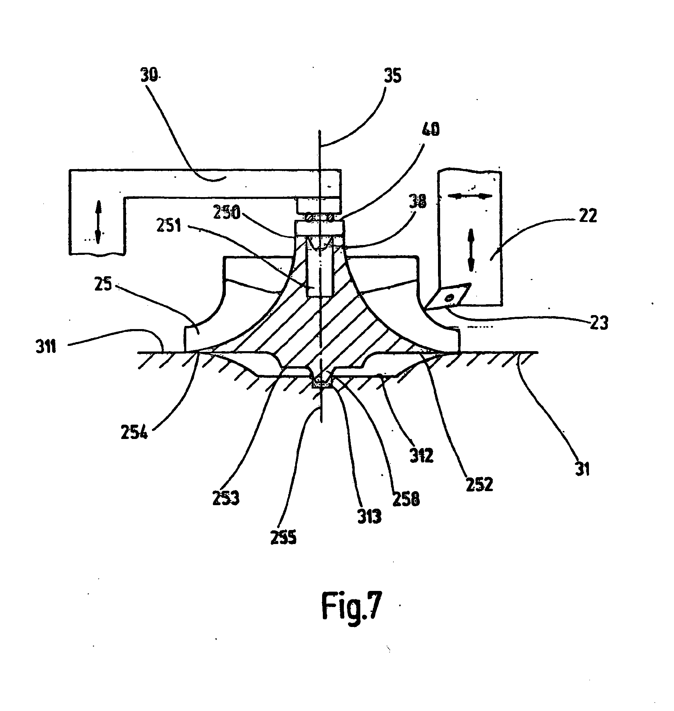

Ein Querschnitt durch ein Werkstück 25, wie es zur Bearbeitung in einer dritten Ausgestaltung einer erfindungsgemäßen Werkzeugmaschine aufgespannt ist, ist in Fig. 7 gezeigt. Anders als das in Fig. 5 gezeigte Werkstück weist das Werkstück 25 hier keine durchgängige zentrische Bohrung, sondern, wie das in Fig. 6 gezeigt Werkstück, im oberen, zum Gegenhalter 30 hin weisenden Bereich eine zentrische Sacklochbohrung 251 auf. Ferner ist an der Unterseite 252 im zentralen Bereich 253 zentrisch zur Drehachse 35 ein vorspringender Dorn 258 angebracht, der in eine entsprechende, im Werkstückteller 31 vorgesehene zentrische Bohrung 313 eingreift und so die zentrische Positionierung des Werkstücks 25 bewirkt. Das selbe Prinzip kann natürlich auch für die Positionierung und Klemmung des Werkstücks im Bereich des Gegenhalters 30 als auch bei der in Fig. 6 gezeigten Ausgestaltung des Werkstücks 25 angewendet werden.

Die Erfindung ist nicht auf die gezeigten Ausgestaltungen beschränkt. Insbesondere kann die Anzahl, Anordnung und Ausgestaltung der Dome je nach Ausgestaltung des zu bearbeitenden Werkstücks variieren. Beispielsweise können auch an der oberen Seite des Werkstücks mehrere Bohrungen vorgesehen sein, für deren Eingriff dann entsprechend angeordnete und ausgestaltete Dome an der Unterseite des Gegenhalters vorgesehen sein können. Ferner ist die Erfindung nicht beschränkt auf die Bearbeitung eines in den Figuren gezeigten Werkstücks, insbesondere eines Turbolader-Verdichterrades, sondern sie ist allgemein bevorzugt anwendbar zur spanenden Bearbeitung von Werkstücken, die im Betrieb mit hoher Drehzahl laufen und deshalb hochpräzise hergestelltwerden müssen, um Unwuchten so weit wie möglich zu vermeiden, so dass ein anschließendes Nachwuchten unterbleiben kann.

## Patentansprüche

1. Werkzeugmaschine zur spanenden Bearbeitung, insbesondere zur Dreh- und Fräsbearbeitung, eines eine zentrische Bohrung (251) aufweisenden Werkstücks (25), mit einem Werkzeughalter (19, 22) zum Halten eines Werkzeugs (23), einer Werkstückauflage (13) zum Auflegen des Werkstücks (25), einer Werkstückhalterung (30) zum Festhalten des Werkstücks (25) und einem Antriebsmittel (33) zum Drehen des Werkstücks (25) um eine zentrische Drehachse (35),
**dadurch gekennzeichnet, dass** die Werkstückauflage (13) einen Dorn (36) zum formschlüssigen Aufstecken des Werkstücks (25) aufweist, so dass ein Abschnitt des Dorns (36) auf einer ersten Seite (252) des Werkstücks (25) in die Bohrung (251) hinein ragt, und dass die Werkstückhalterung (30) einen in Richtung der Bohrungsachse (255) der zentrischen Bohrung (251) bewegbaren Gegenhalter (30) zum Beaufschlagen des Werkstücks (25) mit einem in Richtung der Bohrungsachse (255) wirkenden Anpressdruck auf einer der ersten Seite (252) gegenüber liegenden zweiten Seite (250) aufweist, und dass die Werkstückauflage (13) eine Werkstückauflagefläche zum Auflegen des Werkstücks (25) aufweist, die derart ausgestaltet ist, dass das Werkstück (25) im auf dem Dorn (36) aufgesteckten und von dem Gegenhalter (30) angepressten Zustand nur in seinem Randbereich (254) auf der Werkstückauflagefläche aufliegt.

2. Werkzeugmaschine nach Anspruch 1, **dadurch gekennzeichnet, dass** der Gegenhalter (30) einen Dorn (38) aufweist zum Einstecken in die Bohrung (251) auf der zweiten Seite des Werkstücks (25), so dass ein kegelförmiger Abschnitt des Dorns (38) auf der zweiten Seite des Werkstücks (25) in die Bohrung (251) hinein ragt.

3. Werkzeugmaschine nach einem der vorstehenden Ansprüche, **dadurch gekennzeichnet, dass** die Werkstückhalterung (30) ausgestaltet ist zum Verschwenken des Gegenhalters (30) in einer zur Bohrungsachse (255) senkrechten Schwenkebene.

4. Werkzeugmaschine nach einem der vorstehenden Ansprüche, **dadurch gekennzeichnet, dass** die Drehachse (35) und die Bohrungsachse (255) zusammenfallen.

5. Werkzeugmaschine nach einem der Ansprüche 1 bis 3, **dadurch gekennzeichnet, dass** die Werkstückauflage (13) und/oder der Gegenhalter (30) mehrere Dorne (42) zum Einstecken in entsprechende Bohrungen (256) auf der ersten und/oder zweiten Seite des Werkstücks (25) aufweist und dass die Drehachse (35) und die Bohrungsachsen (257) der entsprechenden Bohrungen (256) parallel zueinander verlaufen.

6. Werkzeugmaschine nach einem der vorstehenden Ansprüche, **dadurch gekennzeichnet, dass** die Werkzeugmaschine eine quer zur Drehachse (35) verlaufende Querachse (28) aufweist, um die das Werkstück geschwenkt werden kann.

7. Werkzeugmaschine nach einem der vorstehenden Ansprüche, **dadurch gekennzeichnet, dass** der Werkzeughalter (19, 22) zum zwei- oder dreidimensionalen Bewegen eines Fräswerkzeugs (23) ausgestaltet ist, insbesondere zum Fräsen der Außenflächen eines Turbolader-Verdichterrades.

8. Verfahren zur spanenden Bearbeitung, insbesondere zur Dreh- und Fräsbearbeitung, eines eine zentrische Bohrung (251) aufweisenden Werkstücks (25), bei dem das Werkzeug (23) von einem Werkzeughalter (19, 22) gehalten wird und das Werkstück (25) auf einer Werkstückauflage (13) aufliegt, von einer Werkstückhalterung (30) festgehalten sowie von einem Antriebsmittel (33) um eine zentrische Drehachse (35) gedreht wird,
**dadurch gekennzeichnet, dass** das Werkstück (25) formschlüssig auf einen Dorn (36) aufgesteckt wird, so dass ein Abschnitt des Dorns (36) auf einer ersten Seite (252) des Werkstücks (25) in die Bohrung (251) hinein ragt, und dass das Werkstück in Richtung der Bohrungsachse (255) der zentrischen Bohrung (251) mit einem in Richtung der Bohrungsachse (255) wirkenden Anpressdruck auf einer der ersten Seite (252) gegenüber liegenden zweiten Seite (250) beaufschlagt wird, um das Werkstück (25) festzuhalten, und dass die Werkstückauflage (13) eine Werkstückauflagefläche zum Auflegen des Werkstücks (25) aufweist, die derart ausgestaltet ist, dass das Werkstück (25) im auf dem Dorn (36) aufgesteckten und von dem Gegenhalter (30) angepressten Zustand nur in seinem Randbereich (254) auf der Werkstückauflagefläche aufliegt.

9. Verfahren nach Anspruch 8, **dadurch gekennzeichnet, dass** in einem ersten Bearbeitungsschritt die Außenflächen des Werkstücks (25) eingebracht werden mittels Drehen, Bohren und/oder Fräsen, und dass in einem zweiten Bearbeitungsschritt die Außenkontur des Werkstücks (25) überdreht wird.

10. Werkzeugmaschine zur spanenden Bearbeitung, insbesondere zur Dreh- und Fräsbearbeitung, eines eine zentrische Drehachse (35) aufweisenden Werkstücks (25), mit einem Werkzeughalter (19, 22) zum Halten eines Werkzeugs (23), einer Werkstückauflage (13) zum Auflegen des Werkstücks (25), einer Werkstückhalterung (30) zum Festhalten des Werkstücks (25) und einem Antriebsmittel (33) zum Drehen des Werkstücks (25) um die Drehachse (35), **dadurch gekennzeichnet, dass** die Werkstückauflage (13) eine Bohrung (313) zum formschlüssigen Aufnehmen eines auf einer ersten Seite (252) des Werkstücks (25) angebrachten Werkstückdorns (258) aufweist, so dass ein Abschnitt des Werkstückdorns (258) in die Bohrung (313) hinein ragt, und dass die Werkstückhalterung (30) einen in Richtung der Drehachse (35) bewegbaren Gegenhalter (30) zum Beaufschlagen des Werkstücks (25) mit einem in Richtung der Drehachse (35) wirkenden Anpressdruck auf einer der ersten Seite (252) gegenüber liegenden zweiten Seite (250) aufweist, und dass die Werkstückauflage (13) eine Werkstückauflagefläche zum Auflegen des Werkstücks (25) aufweist, die derart ausgestaltet ist, dass das Werkstück (25) im in die Bohrung (313) eingesteckten und von dem Gegenhalter (30) angepressten Zustand nur in seinem Randbereich (254) auf der Werkstückauflagefläche aufliegt.

11. Verfahren zur spanenden Bearbeitung, insbesondere zur Dreh- und Fräsbearbeitung, eines eine zentrische Drehachse (35) aufweisenden Werkstücks (25), bei dem das Werkzeug (23) von einem Werkzeughalter (19, 22) gehalten wird und das Werkstück (25) auf einer Werkstückauflage (13) aufliegt, von einer Werkstückhalterung (30) festgehalten sowie von einem Antriebsmittel (33) um die Drehachse (35) gedreht wird,
**dadurch gekennzeichnet, dass** das Werkstück (25) mit einem auf einer ersten Seite (252) angeordneten Werkstückdorn (258) formschlüssig in eine in der Werkstückauflage (13) vorgesehene Bohrung (313) eingesteckt wird, so dass ein Abschnitt des Werkstückdorns (258) in die Bohrung (313) hinein ragt, und dass das Werkstück in Richtung der Drehachse (35) mit einem in Richtung der Drehachse (35) wirkenden Anpressdruck auf einer der ersten Seite (252) gegenüber liegenden zweiten Seite (250) beaufschlagt wird, um das Werkstück (25) festzuhalten, und dass die Werkstückauflage (13) eine Werkstückauflagefläche zum Auflegen des Werkstücks (25) aufweist, die derart ausgestaltet ist, dass das Werkstück (25) im in die Bohrung (313) eingesteckten und von dem Gegenhalter (30) angepressten Zustand nur in seinem Randbereich (254) auf der Werkstückauflagefläche aufliegt.

## Claims

1. A machine tool for machining, in particular for turning and milling, a workpiece (25) having a central bore (251), comprising a tool holder (19, 22) for holding a tool (23), a work rest (13) for seating the workpiece (25), a work mounting (30) for holding the workpiece (25) in place and a drive means (33) for rotating the workpiece (25) about a central rotation axis (35),
**characterized in that** the work rest (13) has an arbor (36) for attaching the workpiece (25) in a positive-locking manner, such that a section of the arbor (36) projects into the bore (251) on a first side (252) of the workpiece (25), and **in that** the work mounting (30) has a counter-holder (30) movable in the direction of the bore axis (255) of the central bore (251) for applying a contact pressure, acting in the direction of the bore axis (255), to the workpiece (25) on a second side (250) opposite the first side (252), and **in that** the work rest (13) has a work rest surface for seating the workpiece (25), said work rest surface being configured in such a way that the workpiece (25), in the state in which it is attached to the arbor (36) and a contact pressure is applied to it by the counter-holder (30), rests only in its marginal region (254) on the work rest surface.

2. The machine tool as claimed in claim 1, **characterized in that** the counter-holder (30) has an arbor (38) for inserting into the bore (251) on the second side of the workpiece (25), such that a tapered section of the arbor (38) projects into the bore (251) on the second side of the workpiece (25).

3. The machine tool as claimed in either of the preceding claims, **characterized in that** the work mounting (30) is designed for pivoting the counter-holder (30) in a pivoting plane perpendicular to the bore axis (255).

4. The machine tool as claimed in one of the preceding claims, **characterized in that** the rotation axis (35) and the bore axis (255) coincide.

5. The machine tool as claimed in one of claims 1 to 3, **characterized in that** the work rest (13) and/or the counter-holder (30) has a plurality of arbors (42) for inserting into corresponding bores (256) on the first and/or second side of the workpiece (25), and **in that** the rotation axis (35) and the bore axes (257) of the corresponding bores (256) run parallel to one another.

6. The machine tool as claimed in one of the preceding claims, **characterized in that** the machine tool has a transverse axis (28) which runs transversely to the rotation axis (35) and about which the workpiece can be pivoted.

7. The machine tool as claimed in one of the preceding claims, **characterized in that** the tool holder (19, 22) is configured for the two- or three-dimensional movement of a milling tool (23), in particular for milling the outer surfaces of a turbocharger compressor impeller.

8. A method for machining, in particular for turning and milling, a workpiece (25) having a central bore (251), in which method the tool (23) is held by a tool holder (19, 22) and the workpiece (25) rests on a work rest (13), is held in place by a work mounting (30) and is rotated about a central rotation axis (35) by a drive means (33),
**characterized in that** the workpiece (25) is attached to an arbor (36) in a positive-locking manner, such that a section of the arbor (36) projects into the bore (251) on a first side (252) of the workpiece (25), and **in that** a contact pressure acting in the direction of the bore axis (255) is applied to the workpiece in the direction of the bore axis (255) of the central bore (251) on a second side (250) opposite the first side (252) in order to hold the workpiece (25) in place, and **in that** the work rest (13) has a work rest surface for seating the workpiece (25), said work rest surface being configured in such a way that the workpiece (25), in the state in which it is attached to the arbor (36) and a contact pressure is applied to it by the counter-holder (30), rests only in its marginal region (254) on the work rest surface.

9. The method as claimed in claim 8, **characterized in that** the outer surfaces of the workpiece (25) are incorporated by means of turning, boring and/or milling in a first machining step, and **in that** the outer contour of the workpiece (25) is finish-turned in a second machining step.

10. A machine tool for machining, in particular for turning and milling, a workpiece (25) having a central rotation axis (35), comprising a tool holder (19, 22) for holding a tool (23), a work rest (13) for seating the workpiece (25), a work mounting (30) for holding the workpiece (25) in place and a drive means (33) for rotating the workpiece (25) about the rotation axis (35),
**characterized in that** the work rest (13) has a bore (313) for accommodating in a positive-locking manner a workpiece arbor (258) which is provided on a first side (252) of the workpiece (25), such that a section of the workpiece arbor (258) projects into the bore (313), and **in that** the work mounting (30) has a counter-holder (30) movable in the direction of the rotation axis (35) for applying a contact pressure, acting in the direction of the rotation axis (35), to the workpiece (25) on a second side (250) opposite the first side (252), and **in that** the work rest (13) has a work rest surface for seating the workpiece (25), said work rest surface being configured in such a way that the workpiece (25), in the state in which it is inserted into the bore (313) and a contact pressure is applied to it by the counter-holder (30), rests only in its marginal region (254) on the work rest surface.

11. A method for machining, in particular for turning and milling, a workpiece (25) having a central rotation axis (35), in which method the tool (23) is held by a tool holder (19, 22) and the workpiece (25) rests on a work rest (13), is held in place by a work mounting (30) and is rotated about the rotation axis (35) by a drive means (33),
**characterized in that** the workpiece (25), with a workpiece arbor (258) arranged on a first side (252), is inserted in a positive-locking manner into a bore (313) provided in the work rest (13), such that a section of the workpiece arbor (258) projects into the bore (313), and **in that** a contact pressure acting in the direction of the rotation axis (35) is applied to the workpiece in the direction of the rotation axis (35) on a second side (250) opposite the first side (252) in order to hold the workpiece (25) in place, and **in that** the work rest (13) has a work rest surface for seating the workpiece (25), said work rest surface being configured in such a way that the workpiece (25), in the state in which it is inserted into the bore (313) and a contact pressure is applied to it by the counter-holder (30), rests only in its marginal region (254) on the work rest surface.

## Revendications

1. Machine-outil pour l'usinage par enlèvement de copeaux, en particulier pour l'usinage par tournage et par fraisage, d'une pièce (25) présentant un alésage central (251), avec un porte-outil (19, 22) pour tenir un outil (23), un support de pièce (13) pour déposer la pièce (25), un porte-pièce (30) pour maintenir la pièce (25) et un moyen d'entraînement (33) pour faire tourner la pièce (25) autour d'un axe de rotation central (35), **caractérisée en ce que** le support de pièce (13) présente un mandrin (36) pour engager la pièce (25) à engagement positif, de telle manière qu'une partie du mandrin (36) pénètre dans l'alésage (251) sur un premier côté (252) de la pièce (25), et **en ce que** le porte-pièce (30) présente un contre-appui (30) mobile dans la direction de l'axe d'alésage (255) de l'alésage central (251) pour appliquer à la pièce (25) une pression agissant dans la direction de l'axe d'alésage (255) sur un deuxième côté (250) opposé au premier côté (252), et **en ce que** le support de pièce (13) présente une face de support de pièce pour déposer la pièce (25), qui est configurée de telle manière que la pièce (25), dans l'état engagé sur le mandrin (36) et pressé par le contre-appui (30), ne repose sur la face de support de pièce que par sa région périphérique (254).

2. Machine-outil selon la revendication 1, **caractérisée en ce que** le contre-appui (30) comporte un mandrin (38) à engager dans l'alésage (251) sur le deuxième côté de la pièce (25), de telle manière qu'une partie conique du mandrin (38) pénètre dans l'alésage (251) sur le deuxième côté de la pièce (25).

3. Machine-outil selon l'une quelconque des revendications précédentes, **caractérisée en ce que** le porte-pièce (30) est configuré pour faire basculer le contre-appui (30) dans un plan de basculement perpendiculaire à l'axe d'alésage (255).

4. Machine-outil selon l'une quelconque des revendications précédentes, **caractérisée en ce que** l'axe de rotation (35) et l'axe d'alésage (255) coïncident.

5. Machine-outil selon l'une quelconque des revendications 1 à 3, **caractérisée en ce que** le support de pièce (13) et/ou le contre-appui (30) présente(nt) plusieurs mandrins (42) à engager dans des alésages correspondants (256) sur le premier et/ou le deuxième côté de la pièce (25), et **en ce que** l'axe de rotation (35) et les axes d'alésage (257) des alésages correspondants (256) s'étendent parallèlement les uns aux autres.

6. Machine-outil selon l'une quelconque des revendications précédentes, **caractérisée en ce que** la machine-outil présente un axe transversal (28) s'étendant perpendiculairement à l'axe de rotation (35), autour duquel la pièce peut basculer.

7. Machine-outil selon l'une quelconque des revendications précédentes, **caractérisée en ce que** le porte-outil (19, 22) est configuré en vue d'un mouvement bi-ou tridimensionnel d'un outil de fraisage (23), en particulier pour le fraisage des faces extérieures d'une roue de compresseur de turbocompresseur.

8. Procédé pour l'usinage par enlèvement de copeaux, en particulier pour l'usinage par tournage et par fraisage, d'une pièce (25) présentant un alésage central (251), dans lequel l'outil (23) est tenu par un porte-outil (19, 22) et la pièce (25) est posée sur un support de pièce (13), est maintenue par un porte-pièce (30) et tourne autour d'un axe de rotation central (35) par le biais d'un moyen d'entraînement (33), **caractérisé en ce que** l'on engage la pièce (25) sur un mandrin (36) à engagement positif, de telle manière qu'une partie du mandrin (36) pénètre dans l'alésage (251) sur un premier côté (252) de la pièce (25), et **en ce que** l'on applique à la pièce, dans la direction de l'axe d'alésage (255) de l'alésage central (251), une pression agissant dans la direction de l'axe d'alésage (255) sur un deuxième côté (250) situé à l'opposé du premier côté (252), afin de maintenir la pièce (25), et **en ce que** le support de pièce (13) présente une face de support de pièce pour déposer la pièce (25), qui est configurée de telle manière que la pièce (25), dans l'état engagé sur le mandrin (36) et pressé par le contre-appui (30), ne repose sur la face de support de pièce que par sa région périphérique (254).

9. Procédé selon la revendication 8, caractérisé en ce l'on introduit les faces extérieures de la pièce (25) dans une première étape d'usinage par tournage, alésage et/ou fraisage, et en ce que l'on repasse au tour le contour extérieur de la pièce (25) dans une deuxième étape d'usinage.

10. Machine-outil pour l'usinage par enlèvement de copeaux, en particulier pour l'usinage par tournage et par fraisage, d'une pièce (25) présentant un axe de rotation central (35), avec un porte-outil (19, 22) pour tenir un outil (23), un support de pièce (13) pour déposer la pièce (25), un porte-pièce (30) pour maintenir la pièce (25) et un moyen d'entraînement (33) pour faire tourner la pièce (25) autour de l'axe de rotation (35), **caractérisée en ce que** le support de pièce (13) présente un alésage (313) destiné à recevoir à engagement positif un mandrin de pièce (258) placé sur un premier côté (252) de la pièce (25), de telle manière qu'une partie du mandrin de pièce (258) pénètre dans l'alésage (313), et **en ce que** le porte-pièce (30) présente un contre-appui (30) mobile dans la direction de l'axe de rotation (35) pour appliquer à la pièce (25) une pression agissant dans la direction de l'axe de rotation (35) sur un deuxième côté (250) situé à l'opposé du premier côté (252), et **en ce que** le support de pièce (13) présente une face de support de pièce pour déposer la pièce (25), qui est configurée de telle manière que la pièce (25), dans l'état engagé dans l'alésage (313) et pressé par le contre-appui (30), ne repose sur la face de support de pièce que par sa région périphérique (254).

11. Procédé pour l'usinage par enlèvement de copeaux, en particulier pour l'usinage par tournage et par fraisage, d'une pièce (25) présentant un axe de rotation central (35), dans lequel l'outil (23) est tenu par un porte-outil (19, 22) et la pièce (25) est déposée sur un support de pièce (13), est maintenue par un porte-pièce (30) et tourne autour de l'axe de rotation (35) par le biais d'un moyen d'entraînement (33), **caractérisé en ce que** l'on engage la pièce (25) à engagement positif par un mandrin de pièce (258) disposé sur un premier côté (252) dans un alésage (313) prévu dans le support de pièce (13), de telle manière qu'une partie du mandrin de pièce (258) pénètre dans l'alésage (313), et **en ce que** l'on applique à la pièce, dans la direction de l'axe de rotation (35), une pression agissant dans la direction de l'axe de rotation (35) sur un deuxième côté (250) situé à l'opposé du premier côté (252), afin de maintenir la pièce (25), et **en ce que** le support de pièce (13) présente une face de support de pièce pour déposer la pièce (25), qui est configurée de telle manière que la pièce (25), dans l'état engagé dans l'alésage (313) et pressé par le contre-appui (30), ne repose sur la face de support de pièce que par sa région périphérique (254).
